# FASCICULE DE BREVET EUROPEEN

(11) **EP 0 392 933 B1**
(45) Date de publication et mention de la délivrance du brevet: **22.06.1994**
(21) Numéro de dépôt: 90401037.8
(22) Date de dépôt: 17.04.1990
(51) Int. Cl.: B65B 51/20

(54) **Procédé et dispositif pour couper et souder un film d'emballage**
Verfahren und Vorrichtung zum Schneiden und Schweissen einer Verpackungsfolie
Method and device for cutting and sealing a packaging film

(30) Priorité: 14.04.1989 FI 891798
(43) Date de publication de la demande: 17.10.1990
(73) Titulaire: NEWTEC INTERNATIONAL, F-73106 Aix-les-Bains (FR)
(72) Inventeur: Haloila, Matti, FI-21130 Poikko (FI)
(74) Mandataire: Orès, Bernard

(56) Documents cités:
- EP-A- 0 180 517
- US-A- 3 802 155
- US-A- 4 216 640

## Description

La présente invention concerne un procédé pour souder et couper un film d'emballage dans une machine à emballer au moyen de laquelle le film d'emballage est enroulé dans la machine d'emballage autour d'un produit, une charge, qui a été amené au poste d'emballage, et dans laquelle à la dernière étape du processus d'emballage le film d'emballage est maintenu entre des mâchoires d'une pince de maintien du film.

L'invention concerne également un dispositif pour souder et couper un film d'emballage dans une telle machine d'emballage équipée d'une pince de maintien du film dont les mâchoires sont agencées pour maintenir et serrer le film entre elles au cours de la dernière étape du processus d'emballage.

Un procédé selon le préambule de la revendication 1 et un dispositif selon le préambule de la revendication 7 sont connus de EP-A-0 180 517.

Dans des machines d'emballage, divers produits, charges ou équivalents (par la suite produits) à emballer sont emballés en étant enveloppés partiellement ou totalement dans un film ou filet d'emballage (par la suite film) de telle façon que le film d'emballage soit enroulé autour du produit à emballer (ou que le produit à emballer soit lui-même déplacé, notamment en rotation dans la machine d'emballage) de façon que le film d'emballage se déroule d'un (ou plusieurs) rouleau de film, pour être appliqué et déposé sur la surface du produit. L'un des problèmes d'une machine d'emballage de ce type concerne la question de savoir comment le film d'emballage peut être amené au contact de la surface du produit à emballer au moment du début du processus d'emballage, et la question de savoir comment à la fin du processus d'emballage, le film d'emballage peut être régulièrement soudé et coupé. Il est donc nécessaire d'équiper la machine d'emballage d'un moyen de serrage ou de ceinture qui maintient le film pendant son déplacement pour l'amener en contact avec la surface du produit à emballer, ce moyen comportant un moyen de soudage pour souder et assurer la solidarisation du film, et un moyen de coupe pour couper le film transversalement. Dans la technique antérieure ces opérations devaient être effectuées généralement par des moyens distincts, avec comme conséquence des mécanismes complexes. Cet inconvénient a été augmenté en ce qui concerne les produits de faibles dimensions car il est devenu difficile avec les moyens de la technique antérieure d'amener le film en contact avec la surface du produit. Un autre inconvénient concernant les moyens de la technique antérieure est venu du fait qu'une fois le film soudé et coupé il restait après l'opération de soudure un long morceau de film qui nuisait considérablement à l'aspect extérieure du produit emballé.

L'état de la technique est illustré notamment par les documents suivants : EP 0 177 413, US 4 109 445, US 4 587 796, EP 0 220 712, US 4 119 445, FR 2 281 275, EP 0 180 517.

La solution apportée par la présente invention à ce problème a consisté à proposer un nouveau procédé et un nouveau moyen pour souder et couper le film, qui soit plus simple et qui donne un excellent résultat en ce qui concerne la soudure.

A cet effet, le procédé de l'invention est caractérisée par le fait qu'à la fin du processus d'enroulement le film d'emballage, l'on coupe le film par rapport au moyen d'alimentation en film et que l'on soude l'extrémité du film d'emballage sur le film d'emballage enveloppant le produit à emballer. La coupe et la soudure étant effectuées au moyen de soufflage d'air chaud à partie de la pince.

L'invention est caractérisée également par le fait que la pince comporte des premiers moyens pour créer des jets d'air chaud de coupe du film d'emballage et de seconds moyens pour créer des jets d'air chaud de soudure du film d'emballage sur le film d'emballage enveloppant le produit emballé.

L'invention apporte un certain nombre d'avantages significatifs par rapport à la technologie antérieure parmi lesquels les avantages suivants peuvent être signalés. La solution de l'invention au problème est plutôt plus simple que la plupart des solutions antérieures; elle implique moins de composants et ses exigences d'entretien sont sensiblement inférieures à celles de la plupart des dispositifs antérieurs. Par conséquent les coûts de fabrication et d'utilisation seront inférieurs aux coûts précédents. Le résultat de la soudure est meilleur et plus régulier que précédemment, en particulier pour effectuer des emballages de différentes dimensions. Globalement on a remarqué que l'invention permet de faire varier les dimensions des palettes support de produits dans de larges limites tout en fonctionnant convenablement et également d'emballer des produits de petite dimension. Les autres avantages et caractéristiques de l'invention ressortiront de la description détaillée de l'invention donnée ci-dessous.

L'invention va maintenant être présentée à titre d'exemple, en se référant aux dessins annexés dans lesquels :
la figure 1 représente une vue schématique et en perspective simplifiée d'une machine d'emballage qui a été équipée du moyen de soudage et de serrage selon l'invention ;
la figure 2 représente une vue en perspective plus détaillé du moyen de soudage et de serrage de l'invention ;
la figure 3 représente une vue de dessus sous forme complètement schématique du soudage et de la coupe du film d'emballage ; et
les figures 4A-4D représentent schématiquement les fonctions des moyens de soudage et de serrage de l'invention au cours des difféérentes étapes du processus d'emballage.

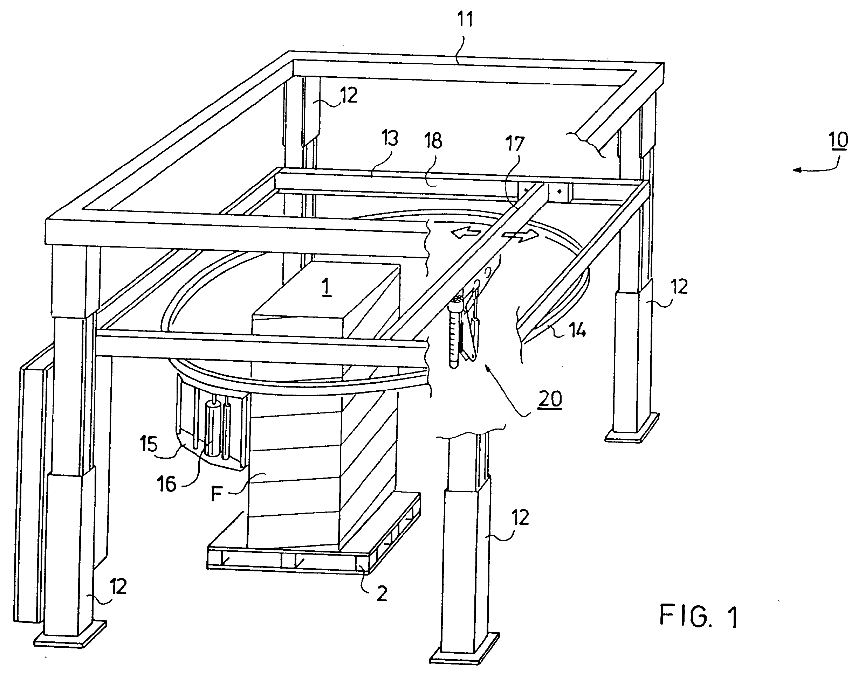

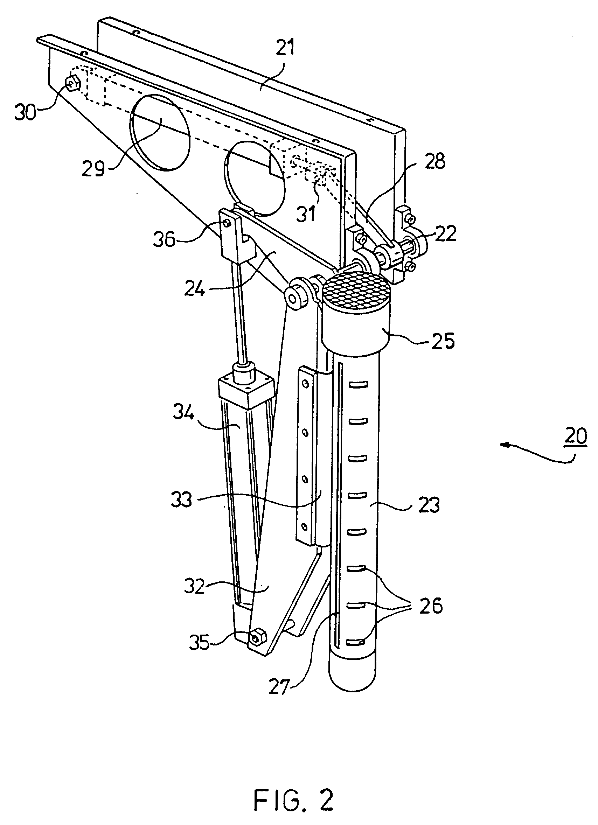

La figure 1 montre une forme possible de réalisation de machine d'emballage désignée dans son ensemble par la référence 10. Cette machine d'emballage 10 comprend un bâti de structure avec un cadre 11 notamment horizontal et supérieur porté par des pieds 12. La machine d'emballage est du type général dit à charge fixe et bobine tournante et plus spécialement du type dit à anneau. Elle est équipée d'un anneau d'emballage tournant 14 autour de son axe vertical. Cet anneau 14 entraîne avec lui pendant le processus d'emballage un chariot 16 de distribution du film situé au dessous et à proximité de l'anneau 14 en direction verticale et supportant un rouleau de film 16 à partir duquel le film d'emballage F est déroulé et appliqué sur et autour d'un produit à emballer 1. Sur la figure 1 le produit à emballer 1 est une charge palettisée, qui est donc supportée par une palette de chargement 2. L'anneau d'emballage 14 a été installé sur et est porté par un bâti 13 dit de support d'anneau d'emballage, qui a été agencé pour être mobile et déplacé à coulissement verticalement dans le bâti de structure 11, 12 de manière qu'une glissière 18 de distribution du film qu'il comporte puisse être placée à la hauteur désirée au cours des différentes étapes du processus d'emballage. La pince 20 de soudage et de serrage selon l'invention est installée sur est portée par un bâti auxiliaire 17 tel qu'un longeron de direction horizontale notamment perpenduculaire au longeron formant la glissière 18 agencé pour être mobile horizontalement le long de la ou des glissières 18 installées sur le bâti 13 de support d'anneau d'emballage. On comprend que dans une machine à emballer 10 comme celle qui est représentée sur la figure 1 la pince de soudage et de serrage 20 soit disposée à l'intérieur de l'anneau d'emballage 14, mais que cette disposition n'entraîne aucun inconvénient pour l'opération d'emballage du fait du principe et du mode de fonctionnement dudit moyen. Cette pince 20 est notamment dirigée verticalement et vers le bras (dans la position particulière représentée sur les figures 1 et 2) en étant placée en dessous du bâti auxiliaire 17 notamment dans une position générale fixe sur celle-ci.

En ce qui concerne les machines d'emballage du type à anneau leur structure générale et leur fonctionnement d'ensemble (hors l'objet de l'invention) sont connues de l'état de la technique et pour cette raison ne sont pas d'avantage décrit, la présente description concernant plus limitativement la pince 20 et son agencement sur la machine ainsi que le procédé mis en oeuvre (voir brevet US 4 587 796). Il doit être expressément compris que sous la désignation générale de film on vise toute matière en bande avec ou sans trous ou perfocations (filet), la bande ayant une laize plus ou moins large pouvant aller jusqu'à celle minimale correspondant à une "corde" jusqu'à celle maximale correspondant à la hauteur du produit 1 voire plus. Cependant, en général, le film consideré est une bande dont la laize est une fraction de la hauteur du produit 1, cette bande pouvant être disposée autour du produit 1 sous forme d'un banderolage hélicoédal continu ou non ou encore sous forme d'un ou plusieurs banderolages droits correspondant notamment au(x) lit(s) du produit 1. La pince 20, a des mâchoires ayant une longueur au moins apte à saisir positivement la bande de film. Le cas échéant la bande de film a, à l'endroit de la pince 20 une largeur plus petite qu'ailleurs du fait qu'elle est repliée sur elle-même.

L'invention concerne un film (au sens de ce qui précède) qui est thérmosoudable et sensible à la chaleur celle-ci pouvant non seulement permettre le soudage du film sur lui-même mais aussi, à un degré plus important la rupture du film donc sa coupe. Un tel film peut être notamment étirable ou thermoretractable.

Par ailleurs l'invention s'applique à d'autres types de machines d'emballage notamment celles à anneau vertical (correspondant donc à un pivotement de 90° sur l'horizontale de la machine et de la charge précédemment décrite (dit machine "bundling") ou encore les machines dites à table tournante dans lesquelles le produit pivote autour d'un axe vertical tandis que la bobine de film est d'axe fixe ou encore les machines dites "rideau", dans lesquelles le produit est déplacé horizontalement à l'encontre d'un rideau vertical de film situé entre deux bobines de film.

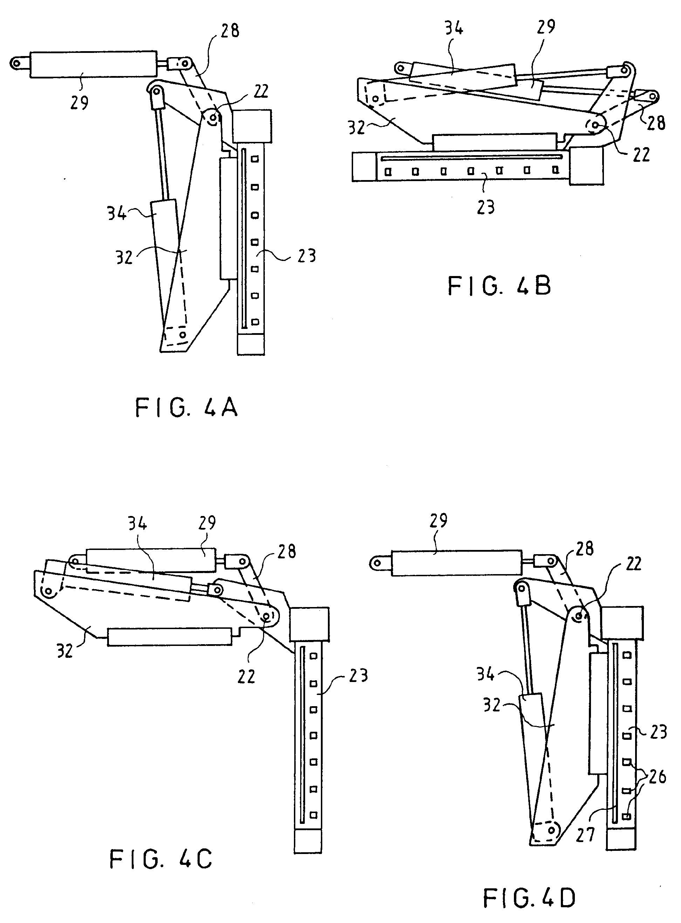

La figure 2 représente avec davantage de détails la pince 20 de soudage et de serrage selon l'invention. La pince de soudage et de serrage 20 comporte un bâti 21 grâce auquel elle est fixée sur le bâti auxiliaire 17. Le bâti 21 porte les mâchoires 23 et 32 montées à pivotement sur un arbre 22, ces mâchoires constituant un moyen de serrage du film, au moyen duquel le film d'emballage est saisi. Si on se refère au cas de la machine à anneau tournant de la figure 1, le bâti 21 s'étend en direction horizontale le long du bâti 17 et l'arbre 22 lui est orthogonal, horizontal et proche. La première mâchoire 23 est rigidement fixée sur l'arbre 22. Il lui est également fixé rigidement un bras de fixation 24 qui s'étend dans une direction générale perpendiculaire à la mâchoire 23. Lorsque l'arbre 22 est en rotation, ladite première mâchoire 23 tourne avec l'arbre 22. Pour faire tourner l'arbre 22, un bras de rotation 28 est rigidement fixé sur l'arbre 22 ; ce bras 28 est rendu mobile et entrainé grâce à un premier vérin, en particulier un vérin à air comprimé 29. Ledit vérin à air comprimé 29 est fixé tout en pouvant pivoter par sa première extrémité 30 au bâti 21 et au bras de rotation 28, à l'opposé de l'extrémité de celui-ci ou se trouve l'arbre 22 par sa seconde extrémité 31. L'ensemble 22, 28, 29 forme une sorte de genouillère permettant une certaine amplitude de pivotement de l'arbre 22 par simple commande du vérin. Cette amplitude est environ un quart de tour (figures 4A à 4D). La seconde mâchoire 32 est montée sur et portée par l'arbre 22, et peut tourner relativement à lui sous la dépendance et la commande d'un second vérin à air comprimé 34 ou équivalent qui est fixé tout en pouvant pivoter à la seconde mâchoire à l'opposé de l'arbre 22 par sa première extrémité 35 et à l'extrémité libre du bras de fixation 24 opposé également à l'arbre 22 par sa seconde extrémité 36. La seconde mâchoire 32 porte un revêtement à friction 33 par exemple en caoutchouc ou en matériau équivalement, qui frotte contre la première mâchoire 23, grâce à quoi le maintien du film d'emballage entre les machoires 23 et 32 est assuré quand les machoires sont fermées.

Dans la pince de soudage et de serrage de l'invention la première mâchoire 23 assure également par elle-même la soudure et la coupe (ou rupture) du film d'emballage. A cet effet, la première mâchoire 23 se présente sous la forme d'une pièce tubulaire creuse équipée d'un moyen de chauffage 25. Le moyen de chauffage comprend par exemple, des résistances électriques ou des moyens équivalents qui servent à chauffer l'air avec lequel la soudure et la coupe du film sont effectuées. Le tube notamment cylindrique formant la première mâchoire 23 porte, sur le côté, des ouvertures 26 d'insufflation et de passage d'air pour la soudure, écartées les unes des autres le long de la mâchoire et une ouverture allongée 27 d'insufflation et de passage d'air pour la coupe s'étendant le long de la mâchoire 23 à proximité des perforations 26. L'air chauffé par le moyen de chauffage 25 est insufflé par les ouvertures 26, 27 sur le film d'emballage, et provient par exemple d'une source d'air comprimé. Le moyen d'application de l'air n'a pas été représenté sur la figure 2.

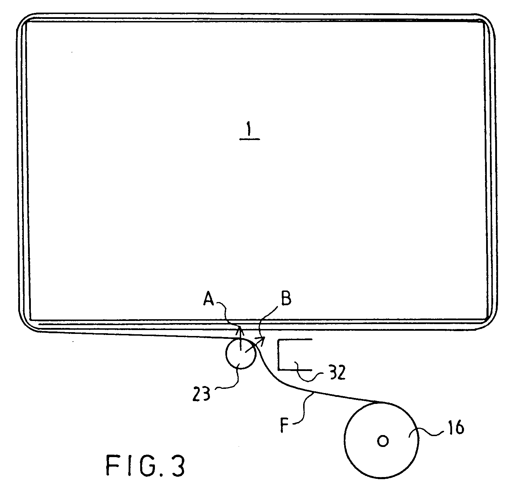

Le fonctionnement du dispositif de l'invention va maintenant être décrit en se référant en particulier aux figures 3 et 4A à 4D. Quand l'emballage commence, le film d'emballage se trouve pris et maintenu entre les mâchoires 23 et 32 fermées, ces mâchoires servant à amener le film d'emballage F en contact ou à proximité immédiate du produit à emballer 1. Il est entendu que dans le texte la notion de "en contact" inclut également celle de proximité immédiate. Ceci est obtenu du fait qu'au moyen du bâti auxiliaire 17 la pince de soudage et de serrage 20 est mise en contact avec le produit à emballer 1. Les mâchoires 23 et 32 de la pince de soudage et de serrage 20 sont alors dans la position représentée sur la figure 4A (direction verticale descendante). Lorsque le procédé d'emballage commence et que le film d'emballage F a été amené au-dessus d'un angle du produit à emballer 1, le premier vérin à air comprimé 29 est mis en oeuvre dans le but de faire tourner les mâchoires 23 et 32 jusqu'à la position représentée sur la figure 4B, c'est-à-dire vers le haut et en dehors de l'exécution de l'opération d'emballage (direction horizontale). Le film d'emballage F se trouve encore entre les mâchoires 23 et 32. Lorsque le film d'emballage a effectué un tour et un peu plus autour du produit 1, les mâchoires sont légèrement écartées grâce aux vérins 29 et/ou 34 si bien que l'extrémité du film d'emballage est dégagée.

Lorsque l'emballage est arrivé à son dernier stade, la première mâchoire 23 est tournée vers le bas jusque dans la position verticale descendante représentée sur la figure 4C, au moyen du vérin 29, tandis que la seconde mâchoire 32 est encore maintenue grâce au vérin 34 dans la position supérieure horizontale représentée sur la figure 4C. En même temps, la totalité de la pince de soudage et de serrage 20 est déplacée grâce au bâti auxiliaire 17 en direction du produit à emballer. Le film d'emballage F se déroulant de la glissière 15 de distribution du film passe alors sur la première mâchoire 23, après quoi le second vérin à air comprimé sert à faire pivoter la seconde mâchoire 32 afin que le film d'emballage F se trouve prisonnier entre les mâchoires 23 et 32. Ceci a conduit à la position de la figure 4D. La pince de soudage et de serrage 20 est ensuite déplacée complètement jusqu'à la surface du produit à emballer 1, après quoi la soudure et la coupe du film d'emballage F sont effectuées grâce à de l'air chaud, l'air chauffé par le moyen de chauffage 25 étant soufflé contre le produit à emballer 1 sous forme d'un jet A pour le soudage, à travers les ouvertures d'insufflation de soudage 26 et sous forme d'un jet de coupe B à travers les ouvertures de coupe 27. Il faut bien voir que la soudure et la coupe du film d'emballage F au moyen de l'air chaud sont effectuées sensiblement en même temps. Puisque le jet de coupe B est orienté, comme le montrent en particulier les figures 2 et 3, immédiatement au-dessous du jet de soudage A, il ne reste qu'une longueur minimale de film après la soudure du film d'emballage F, et de ce fait le produit emballé prend un aspect très agréable losque le moyen de l'invention est utilisé. Lorsque les opérations de soudage et de coupe sont terminées, le film d'emballage F reste entre les mâchoires 23 et 32 de la pince 20 en se trouvant ainsi prêt pour le prochain produit à emballer.

Un autre avantage est apporté grâce à la solution de l'invention, plus particulièrement avec des machines d'emballage 10 qui sont équipées d'un anneau d'emballage 14, comme représenté sur la figure 1. La pince 20 a été installée sur un bâti auxiliaire 17 agencé pour être mobile dans des guides 18 montés sur le bâti 23 supportant l'anneau d'emballage. Comme le montre la figure 1, la pince 20 est déplacée sensiblement à la même hauteur que le chariot 15 de distribution du film. De cette façon, la pince 20 se trouve toujours à la hauteur correcte par rapport a chariot 15 de distribution du film, autrement dit l'emballage peut commercer et se terminer à n'importe quelle hauteur souhaitée. Bien que la pince 20 de l'invention soit particulièrement avantageuse pour son emploi sur des machines à emballer 10 équipées d'un anneau d'emballage 14, le moyen de l'invention n'est pas simplement limité à des machines de ce type ; il peut facilement être appliqué à d'autres types de machines d'emballage.

Dans ce qui précède l'invention a été décrite à titre d'exemple, en se référant aux figures des dessins annexés. toutefois, cela ne vise en rien à limiter l'invention simplement à l'exemple qui a été présenté sur les figures ; en restant dans le cadre de l'invention telle qu'elle est définie par les revendications suivantes.

## Revendications

1. Procédé de soudage et de coupe d'un film d'emballage dans une machine d'emballage (10) dans laquelle le film d'emballage (F) est placé autour d'un produit à emballer (1) amené dans la machine, et dans laquelle au cours de la dernière phase du processus d'emballage le film d'emballage (F) est maintenu serré entre des mâchoires (23, 32) d'une pince, à la fin d'un processus d'emballage, le film d'emballage (F) étant entraîné avec les mâchoires (23, 32) de la pince, en contact ou à proximité immédiate du produit emballé (1), caractérisé en ce que l'on coupe le film (F) par rapport au moyen d'alimentation (16) en film et que l'on soude l'extrémité du film d'emballage sur le film d'emballage enveloppant le produit à emballer (1) la coupe et la soudure étant effectuées au moyen de soufflage d'air chaud à partir de la pince.

2. Procédé selon la revendication 1, caractérisé en ce que la soudure (A) et la coupe (B) du film d'emballage (F) sont effectuées sensiblement en même temps au moyen d'une seule et même impulsion de chaleur.

3. Procédé selon la revendication 1 ou 2, caractérisé en ce que la chaleur nécessaire aux jets d'air chaud (A,B) est formé dans l'une des deux mâchoires (23) de la pince et en ce que l'air chaud est soufflé sur le film à travers ladite mâchoire (23).

4. Procédé selon l'une quelconque des revendications précédentes, caractérisé en ce que l'on chauffe l'air nécessaire aux jets d'air chaud (A,B) à l'aide de résistances électriques.

5. Procédé selon l'une quelconque des revendications précédentes, caractérisé en ce que le jet d'air chaud de soudage (A) et le jet d'air chaud de coupe (B) sont dirigés sur le film (F) à travers des ouvertures distinctes (26,27).

6. Procédé selon l'une quelconque des revendications précédentes, caractérisé en ce que le jet de coupe (B) est orienté vers le film (F) immédiatement à côté du jet de soudage (A) si bien que le film (F) est coupé immédiatement après l'exécution de la soudure.

7. Dispositif de soudage et de coupe d'un film d'emballage destiné à une machine d'emballage (10) équipée d'une pince de maintien du film comprenant des mâchoires (23,32) de maintien du film (F) serré entre les mâchoires (23,32) au cours de la phase finale du processus d'emballage, la pince de maintien du film (23,32) comportant des actionneurs (29, 34) pour qu'au moment où le processus d'emballage est en cours d'achèvement,elle soit déplacée et amène le film d'emballage (F) contre ou à proximité immédiate du produit à emballer, caractérisé en ce que la pince comporte des premiers moyens (25, 27) pour créer des jets d'air chaud de coupe du film d'emballage (F) et de seconds moyens (25, 26) pour créer des jets d'air chaud de soudure du film d'emballage sur le film d'emballage enveloppant le produit emballé (1).

8. Dispositif selon la revendication 7, caractérisé en ce que lesdits moyens (25, 26, 27) pour former des jets d'air chaud (A,B) sont placés sur l'une des mâchoires (23).

9. Dispositif selon la revendication 6, 7 ou 8, caractérisé en ce que ladite mâchoire (23) du support de film comprend un tube creux équipé d'un moyen de chauffage d'air (25) et d'ouvertures (26,27) ménagées dans la paroi du tube à travers lesquelles l'air chauffé par le moyen de chauffage et insufflé contre le film d'emballage (F) pour souder et couper le film d'emballage.

10. Dispositif selon l'une quelconque des revendications 7 à 9, caractérisé en ce que ledit moyen de chauffage (25) comprend une ou plusieurs résistances électriques.

11. Dispositif selon l'une quelconque des revendications 7 à 10, caractérisé en ce que les ouvertures (26, 27) pour souder et couper le film d'emballage sur la mâchoire (23) constituée du tube sont disposés immédiatement côte à côte, de sorte que le jet de coupe (B) soit dirigé vers le film d'emballage (F) immédiatement à côté du jet de soudage (A).

12. Dispositif selon l'une quelconque des revendications 7 à 11, caractérisé en ce que les ouvertures (26, 27) prévues dans la mâchoire constituée d'un tube comprennent plusieurs ouvertures (26) pour jet de soudage écartées les unes des autres sur la longueur de la mâchoire (23) et une ouverture étroite pour jet de coupe (27) ayant une longueur sensiblement égale à celle de la mâchoire (23).

## Patentansprüche

1. Verfahren zum Schweißen und Schneiden einer Verpackungsfolie mit einer Verpackungsmaschine (10), in welcher die Verpackungsfolie (F) um einen der Maschine zugeführten, zu verpackenden Gegenstand (1) gewickelt wird und bei welcher in der letzten Phase des Verpackungsvorganges die Verpackungsfolie (F) zwischen Klemmbacken (23, 32) einer Zange festgehalten ist, wobei am Ende eines Verpackungsvorganges die Verpackungsfolie (F) mittels der Klemmbacken (23, 32) der Zange in Kontakt oder in unmittelbare Nähe des zu verpackenden Gegenstandes (1) bewegt wird, **dadurch** **gekennzeichnet, daß** die Folie (F) zumindest bezüglich der Folienzufuhr (16) abgeschnitten und das Ende der Verpackungsfolie mit der den zu verpackenden Gegenstand (1) umgebenden Verpackungsfolie verschweißt wird, wobei das Schneiden und Verschweißen durch Ausströmen von Heißluft aus der Zange erfolgt.

2. Verfahren nach Anspruch 1, **dadurch gekennzeichnet, daß** das Schweißen (A) und das Schneiden (B) der Verpackungsfolie (F) im wesentlichen gleichzeitig mittels eines einzigen Hitzeimpulses erfolgt.

3. Verfahren nach Anspruch 1 oder 2, **dadurch gekennzeichnet, daß** die für die Heißluftstrahlen (A, B) erforderliche Wärme in einer der zwei Klemmbacken (23) der Zange erzeugt wird und daß die Heißluft quer zu der Klemmbacke (23) auf die Folie geblasen wird.

4. Verfahren nach einem der vorigen Ansprüche, **dadurch gekennzeichnet, daß** die für die Heißluftstrahlen (A, B) erforderliche Luft mit Hilfe elektrischer Widerstände aufgeheizt wird.

5. Verfahren nach einem der vorigen Ansprüche, **dadurch gekennzeichnet**, **daß** der Heißluftstrahl zum Verschweißen (A) und der Heißluftstrahl zum Abschneiden (B) durch bestimmte Öffnungen (26, 27) auf die Folie (F) gerichtet sind.

6. Verfahren nach einem der vorigen Ansprüche, **dadurch gekennzeichnet, daß** der Schneidestrahl (B) unmittelbar neben dem Schweißstrahl (A) gegen die Folie gerichtet ist, sodaß die Folie (F) unmittelbar nach dem Verschweißen geschnitten wird.

7. Vorrichtung zum Verschweißen und Schneiden einer Verpackungsfolie einer Verpackungsmaschine (10), die mit einer Zange zum Halten der Folie ausgerüstet ist, welche Klemmbacken (23, 32) aufweist, um die Folie (F) während der letzten Phase des Verpackungsvorganges zwischen den Klemmbacken (23, 32) festzuhalten, wobei die Zange zum Halten der Folie Antriebe (29, 34) aufweist, durch welche die Zange in dem Augenblick, in welchem der Verpackungsvorgang nahezu beendet ist, versetzt und die Verpackungsfolie (F) gegen oder in unmittelbare Nähe des zu verpackenden Gegenstandes gebracht wird, **dadurch gekennzeichnet, daß** die Zange erste Mittel (25, 27), die Heißluftstrahlen zum Schneiden der Verpackungsfolie erzeugen, und zweite Mittel (25, 26) aufweist, die Heißluftstrahlen zum Verschweißen der Verpackungsfolie mit der den zu verpackenden Gegenstand (1) umgebenden Verpackungsfolie erzeugen.

8. Vorrichtung nach Anspruch 7, **dadurch gekennzeichnet, daß** die Mittel (25, 26, 27) zum Erzeugen der Heißluftstrahlen (A, B) an einer der Klemmbacken (23) angeordnet sind.

9. Vorrichtung nach Anspruch 6 oder 7, **dadurch gekennzeichnet, daß** die Klemmbacke (23) zum Festhalten der Folie ein Hohlrohr aufweist, in welchem ein Mittel zum Aufheizen der Luft (25) und in der Wand Öffnungen (26, 27) vorgesehen sind, durch welche die von den Mitteln zum Aufheizen der Luft erzeugte Heißluft gegen die Verpackungsfolie (F) geblasen wird, um die Verpackungsfolie zu verschweißen und zu schneiden.

10. Vorrichtung nach einem der Ansprüche 7 bis 9, **dadurch gekennzeichnet, daß** das Mittel zum Aufheizen (25) einen oder mehrere elektrische Widerstände aufweist.

11. Vorrichtung nach einem der Ansprüche 7 bis 10, **dadurch gekennzeichnet, daß** die in der als Röhre ausgebildeten Klemmbacke (23) vorgesehenen Öffnungen (26, 27) zum Verschweißen und Abschneiden der Verpackungsfolie unmittelbar nebeneinander angeordnet sind, sodaß der Schneidestrahl (B) in unmittelbarer Nähe des Schweißstrahles (A) auf die Verpackungsfolie (F) gerichtet ist.

12. Vorrichtung nach einem der Ansprüche 7 bis 11, **dadurch gekennzeichnet, daß** die in der als Röhre ausgebildeten Klemmbacke vorgesehenen Öffnungen (26, 27) mehrere über die Länge der Klemmbacke (23) verteilte und in Abstand voneinander angeordnete Öffnungen (26) für den Schweißstrahl und eine geradlinige Öffnung für den Schneidestrahl (27) aufweisen, dessen Länge im wesentlichen jener der Klemmbacke (23) entspricht.

## Claims

1. A method of welding and cutting a packaging film in a packaging machine (10) in which the packaging film (F) is placed around a product to be wrapped (1) conveyed into the machine and in which during the course of the final phase of the packaging process the packaging film (F) is maintained gripped between jaws (23, 32) of a gripping means, at the end of a packaging process, the packaging film (F) being entrained with the jaws (23, 32) of the gripping means in contact with or in the immediate proximity of the packaged product (1), characterised in that the film (F) is cut in relation to the film supply means (16) and in that the end of the packaging film is welded onto the packaging film enveloping the product to be wrapped (1), the cutting and the welding being carried out by the blowing of hot air from the gripper means.

2. A method according to Claim 1, characterised in that the welding (A) and the cutting (B) of the packaging film (F) are carried out substantially at the same time by means of one and the same single heat pulse.

3. A method according to Claim 1 or 2, characterised in that the heat necessary for the hot air jets (A, B) is formed in one of the two jaws (23) of the gripper means and in that the hot air is blown onto the film through the said jaw (23).

4. A method according to any one of the preceding Claims, characterised in that the air needed for the hot air jets (A, B) is heated by means of electrical resistors.

5. A method according to any one of the preceding Claims, characterised in that the jet of hot air for welding (A) and the jet of hot air for cutting (B) are directed onto the film (F) through different orifices (26, 27).

6. A method according to any one of the preceding Claims, characterised in that the cutting jet (B) is orientated towards the film (F) immediately beside the welding jet (A) so that the film (F) is cut immediately after the weld has been made.

7. An apparatus for welding and cutting a packaging film intended for a packaging machine (10) equipped with a gripper means for holding the film, comprising jaws (23, 32) for holding the film (F) gripped between the jaws (23, 32) during the final phase of the packaging process, the gripper means for holding the film (23, 32) comprising actuators (29, 34) so that at the moment when the packaging process is in course of completion, it is displaced and conveys the packaging film (F) against or in the immediate proximity of the product to be packaged, characterised in that the gripper means comprises first means (25, 27) for creating jets of hot air for cutting the packaging film (F) and second means (25, 26) for creating jets of hot air for welding the packaging film on the packaging film surrounding the packaged product (1).

8. An apparatus according to Claim 7, characterised in that the said means (25, 26, 27) for forming hot air jets (A, B) are situated on one of the jaws (23).

9. An apparatus according to Claim 6, 7 or 8, characterised in that the said jaw (23) of the film carrier comprises a hollow tube equipped with air heating means (25) and apertures (26, 27) disposed in the wall of the tube through which the air heated by the heating means is blown against the packaging film (5) for welding and cutting the packaging film.

10. An apparatus according to any one of Claims 7 to 9, characterised in that the said heating means (25) comprises one or more electrical resistors.

11. An apparatus according to any one of Claims 7 to 10, characterised in that the openings (26, 27) for welding and cutting the packaging film on the jaw (23) constituted by the tube are disposed immediately side by side so that the cutting jet (B) is directed at the packaging film (F) immediately beside the welding jet (A).

12. An apparatus according to any one of Claims 7 to 11, characterised in that the openings (26, 27) provided in the jaw constituted by a tube comprise a plurality of apertures (26) for welding jet, separated from one another over the length of the jaw (23) and one narrow opening for a cutting jet (27) and having a length substantially equal to that of the jaw (23).
